# EUROPEAN PATENT SPECIFICATION

(11) **EP 1 854 528 B1**
(45) Date of publication and mention of the grant of the patent: **30.06.2010**
(21) Application number: 07250968.0
(22) Date of filing: 08.03.2007
(51) Int. Cl.: B01D 45/14, B04B 5/00

(54) **Rotary phase separator system**
System zur Phasentrennung mittels Rotation
Séparateur de phases rotativ

(30) Priority: 08.05.2006 US 429859
(43) Date of publication of application: 14.11.2007
(73) Proprietor: Hamilton Sundstrand Corporation, Windsor Locks, CT 06096-1010 (US)
(72) Inventor: Barone, Michael R., Amston, Connecticut 06231 (US); Scull, Timothy D., Riverton, Connecticut 06065 (US); Murdoch, Karen, Somers, Connecticut 06071 (US); Fort, James H., Granby, Connecticut 06035 (US)
(74) Representative: Tomlinson, Kerry John

(56) References cited:
- GB-A- 1 531 700
- US-A- 5 244 479
- US-A- 5 693 125
- US-A1- 2003 000 184

## Description

The present invention relates to a rotary phase separator system, useful particularly in two-phase separation. A prior art rotary phase separator is disclosed in US 2003/0000184.

Because of re-supply constraints in long duration missions, such as space missions, minimizing mass, volume and power are essential. Closed Advanced Life Support Systems (ALS), including Air Revitalization Subsystem, Water Revitalization Subsystem, etc., are desirable. In a typical Advanced Air Revitalization System, water is electrolyzed into oxygen (02) and hydrogen (H2) in an oxygen generation subsystem. Water is also consumed in various hygiene needs, physiological loads and other life support functions. A typical Water Recovery System (WRS) will regenerate water from various wastewater streams.

One WRS system is a Sabatier System which is designed to recover water and does so via a reaction that produces water vapor mixed with gases (primarily methane and CO₂), CO2 reacts with H2 and generates water and methane according to the following Sabatier reaction:

CO2 + 4H2 → 2H2O + CH4

The Sabatier system accomplishes this by utilizing hydrogen, carbon dioxide, and waste products from the life support system to produce water and methane.

The catalytic methanation reaction between CO2 and H2 is exothermic and self sustainable. Water vapor generated from the Sabatier reactor can be recovered by passing the product gases through a condenser in which the water is condensed, yielding a two-phase flow (water in mostly gas stream). The recovered water is then recycled back into the life support system to provide oxygen; while the methane can be used for propulsion, or can be broken down further to recover the hydrogen. This technology is applicable not only to transit phases of exploration, but surface habitats as well as in-situ propellant production.

Accordingly, it is desirable to provide a compact and lightweight two-phase separator system which separates water from gas, accumulates the water, and pumps the water at higher pressure for downstream processing and use while minimizing power consumption.

According to the invention, there is provided a rotating assembly for a rotary phase separator system for separating a liquid from a two phase flow, said rotating assembly comprising: a hollow shaft defined along an axis of rotation and arranged to receive a two phase flow; an accumulator section for accumulating liquid mounted about said hollow shaft for rotation with said hollow shaft, said accumulator section communicating with said hollow shaft and defining a first diameter; and an impeller pump section for pumping liquid from the rotating assembly mounted about said accumulator section for rotation with said hollow shaft and communicating with said accumulator section, said impeller pump section defining a second diameter greater than said first diameter.

In an embodiment, the rotating assembly forms part of a rotary phase separator system, the system comprising: a housing; a hydrodynamic bearing mounted within said housing, wherein the rotating assembly is mounted to said hydrodynamic bearing for rotation within said housing, said rotating assembly further comprising a gas outlet tube mounted within said hollow shaft, and a primary separating impeller mounted within an impeller shaft section of said hollow shaft for rotation therewith; a two-phase input port within said housing and in communication with said impeller shaft section; and a gas outlet port within said housing along said axis of rotation, said gas outlet port being in communication with said gas outlet tube.

The invention also provides a method of recovering a liquid from a two phase flow comprising the steps of:
(1) rotating a rotating assembly according to the present invention about its axis of rotation at a first speed;
(2) introducing the two-phase flow into the rotating hollow shaft;
(3) separating the two-phase flow such that a liquid component is centrifugally separated radially outward relative to the axis of rotation into the accumulator section mounted about the hollow shaft;
(4) collecting a gas component generally along said axis of rotation;
(5) accumulating the liquid component within the accumulator section;
(6) selectively rotating the hollow shaft about the axis of rotation at a second speed greater than the first speed; and
(7) pumping out the liquid component with the impeller pump section mounted about the accumulator section in response to said step (6).

The rotary phase separator system according to embodiments of the present invention generally includes a rotary drum separator (RDS) and a motor assembly. The motor assembly drives a rotating assembly of the RDS in response to a controller which drives the RDS at two operation speeds. A low speed is used for separating and accumulating water from gas. A higher speed is used for pumping the water once the accumulator is full.

In operation, the two-phase flow (water in mostly gas stream) is input into an impeller shaft section of a hollow shaft through a two-phase inlet tap. The two-phase flow is centrifugally flung to the outer diameter of the impeller shaft section that moves the water radially outward while allowing the gas to communicate and collect within a central shaft section along an axis of rotation.. The primary separating impeller provides ample flow area for the gas while maintaining small clearances to the central shaft section and thence to a gas outlet tube. A secondary separating impeller mounted within the hollow shaft facilitates separation capability and robustness to further minimize liquid (if present) injection into an inlet of the gas outlet tube.

The accumulating function is effectuated inside an accumulator section and an impeller pump section that form an annulus around the center hollow shaft. The water rotates at essentially shaft speed since it is fully enclosed by the accumulator section and the impeller pump section and has virtually no exposure to stationary walls. The "full" level of the accumulators is at the hollow shaft OD (outside diameter). The "empty" level of the accumulator section is at the accumulator OD. The smooth outside walls of the drums minimize power losses. A minimized diameter to length ratio also minimizes power losses. As the accumulator section and the impeller pump section fill with liquid, the gases therein are forced radially inward back into the hollow shaft toward the axis of rotation and through the shaft gas communication apertures and thence into the inlet of the gas outlet tube.

The pumping function is accomplished by the impeller pump section which is facilitated by the internal vanes between the impeller disks. Once the accumulation section is "full" the liquid is pumped through the tangential outlet located at the maximum diameter of the device to maximize both static and dynamic head.

The RDS operates on a two-speed schedule. At low speed, about 1000 rpm, the RDS creates enough of an artificial gravity field to effectively separate the gas and liquid phases. The gas port is always open when the Sabatier is in process mode generating water; therefore the vent gases flow through the RDS with very little pressure drop. Once the liquid level of the separator reaches the high end of the operating range ("full"), the controller increases the speed of the RDS to about 2000 rpm. At this speed, the pressure generated by the centrifugal and velocity forces of the liquid in the impeller shaft section of the rotating assembly is sufficient to overcome the system backpressure and the liquid empties from the RDS. The high speed condition is maintained for a sufficient length of time such that the liquid level drops to the low end of the operating range ("empty").

The present invention therefore provides, at least in its preferred embodiments, a compact and lightweight two-phase separator system which separates water from gas, accumulates the water, and pumps the water at higher pressure for downstream processing and use while minimizing power consumption.

Various features and advantages of this invention will become apparent to those skilled in the art from the following detailed description of the currently preferred embodiment, given by way of example only. The drawings that accompany the detailed description can be briefly described as follows:
Figure 1 is a general schematic view of a Sabatier Reduction system to which the present invention may be applied;
Figure 2 is a perspective view of a rotational assembly for a rotary drum separator in accordance with the present invention;
Figure 3A is a perspective view of a rotary drum separator in accordance with the present invention;
Figure 3B is a sectional view of the rotational assembly taken along line 3B-3B in Figure 3A;
Figure 3C is a sectional view of the rotational assembly taken along line 3C-3C in Figure 3A;
Figure 3D is a sectional view of the rotational assembly taken along line 3D-3D in Figure 3A;
Figure 4 is an expanded cut away perspective view of a shaft of the rotational assembly for the rotary drum separator;
Figure 5 is an expanded perspective view of the shaft of the rotational assembly for the rotary drum separator; and
Figure 6 is a graphical representation of an operating map for the rotary drum separator.

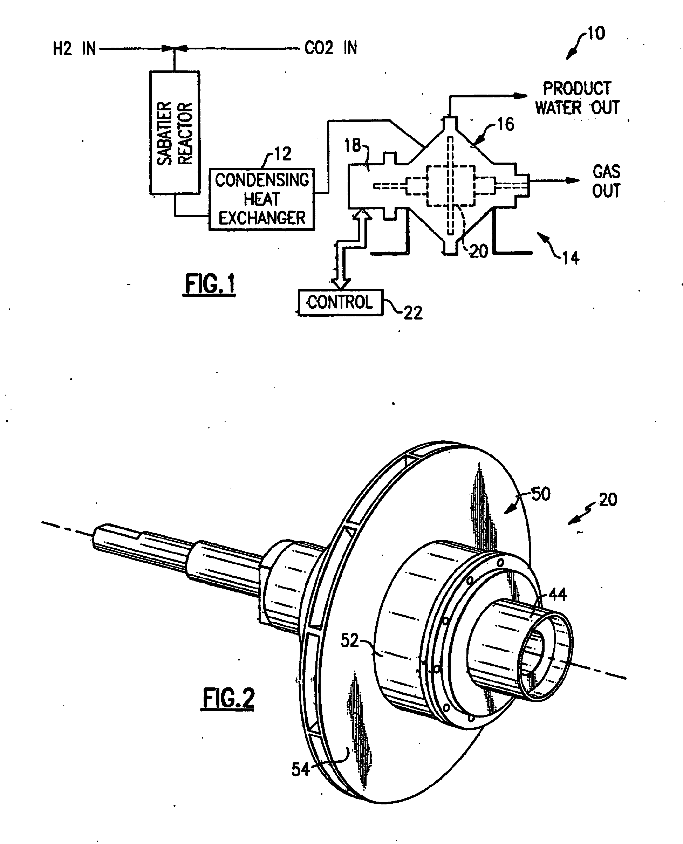

Figure 1 illustrates a general perspective view of a Sabatier Reduction system 10 which receives the hydrogen by-product from electrolytic oxygen generation and metabolic carbon dioxide that is concentrated by a molecular sieve bed and reacts them to form methane and water. The reactor products are cooled in a heat exchanger 12 where the water product condenses to liquid. The liquid water and methane gas are then separated in a rotary phase separator system 14, with the water being delivered to the water bus and the methane released out the vacuum vent duct. Potable water is thereby provided.

The rotary phase separator system 14 generally includes a rotary drum separator (RDS) 16 and a motor assembly 18. The motor assembly 18 drives the RDS 16 through a rotating assembly 20 (Figure 2) in response to a controller 22 (illustrated schematically).

The RDS preferably operates at two operation speeds. A low speed is used for separating and accumulating water from gas. A higher speed is used for pumping the water once the accumulator is full. It should be understood that other two-phase reduction systems will also benefit from the RDS 16 designed according to the present invention. The rotary phase separator system 14 provides for separation of methane gas and liquid water phases at about 10 psia (69 kPa), and pumping of the liquid to a water bus pressure of up to 18 psia (124 kPa). The rotary phase separator system 14 achieves this pumping at less than 100 Watts, and separation at less than 25 Watts.

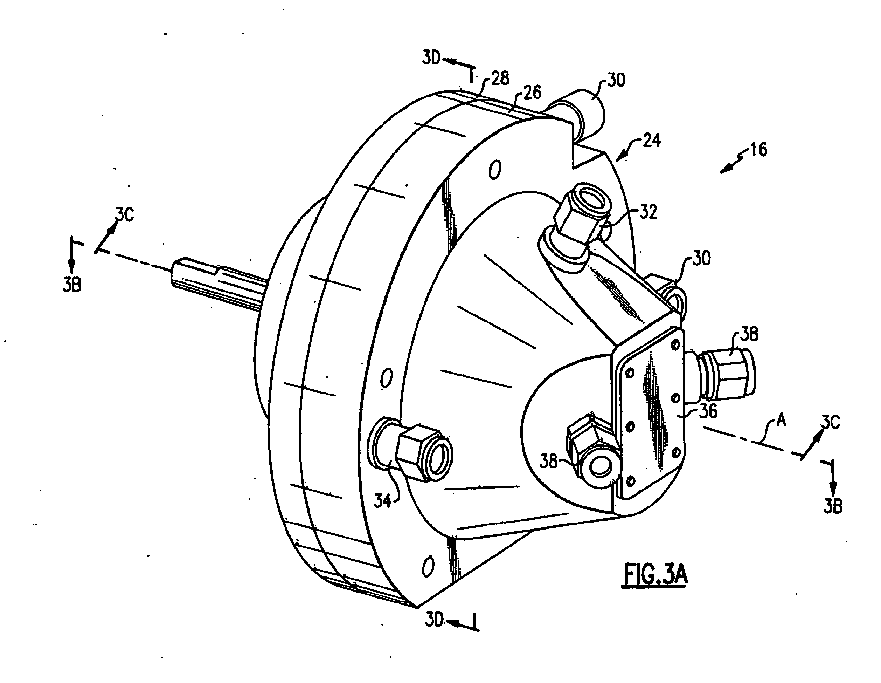

Referring to Figure 3A, the RDS 16 includes a housing assembly 24 within which the rotating assembly 20 (Figure 2) rotates about an axis of rotation A. Preferably, the housing assembly 24 includes a first housing portion 26 and a second housing portion 28 which enclose the rotating assembly 20 and provide passageways for fluid circulation. A water outlet tangential port tap 30 is tangential to the housing outer diameter and as such collects the water at maximum velocity head. A pressure port 32 provides for identification of a fill level. A radial port 34 normal to the rotating assembly 20 rotation serves as a static pressure port. A gas outlet port 36 is located along the RDS 16 centerline A and two two-phase inlet ports 38 are located adjacent thereto. It should be understood that although only particular taps are described, any multiple of taps may be utilized with the present invention. It should be understood that taps 32T, 34T, 36T may be respectively located in the housing assembly 24 to provide communication with the respective ports 32, 34, 36. That is, the taps 32T, 34T, 36T provide connections with the housing assembly 24 and porting defined therein. Preferably, the internal volume of the separator will hold approximately 170 cc of water when full with a working volume of 70 cc mounted around the rotating assembly 20.

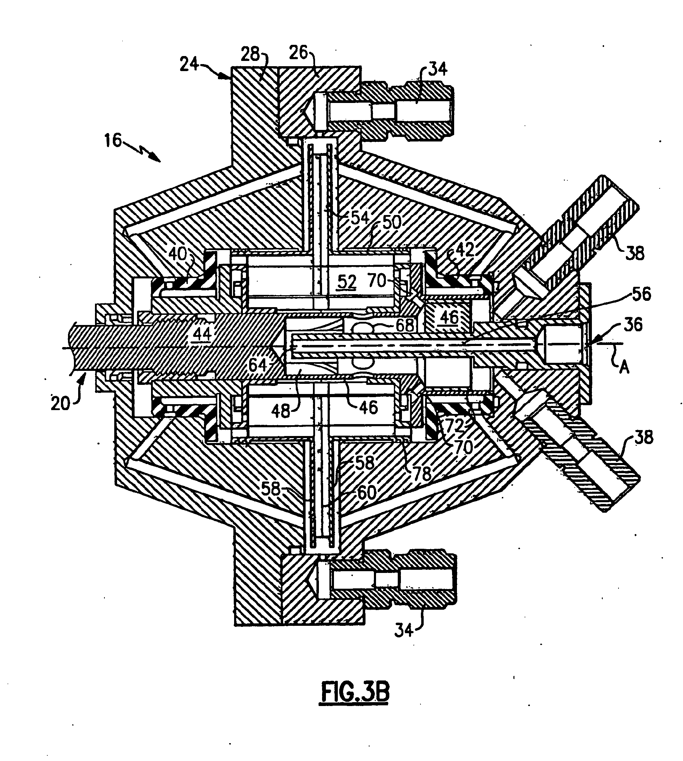

Referring to Figure 3B, the rotating assembly 20 is mounted on a first and a second hydrodynamic bearing 40, 42 for rotation about the axis of rotation A. The bearings 40, 42 preferably provide both radial and thrust functions. The rotating assembly 20 includes a hollow shaft 44 which contains a primary separating impeller 46 and a secondary separating impeller 48. The motor provides leak free operation at sub-ambient pressure. The hollow shaft 44 contains a gas outlet tube 56 to the gas outlet port 36 located opposite the motor.

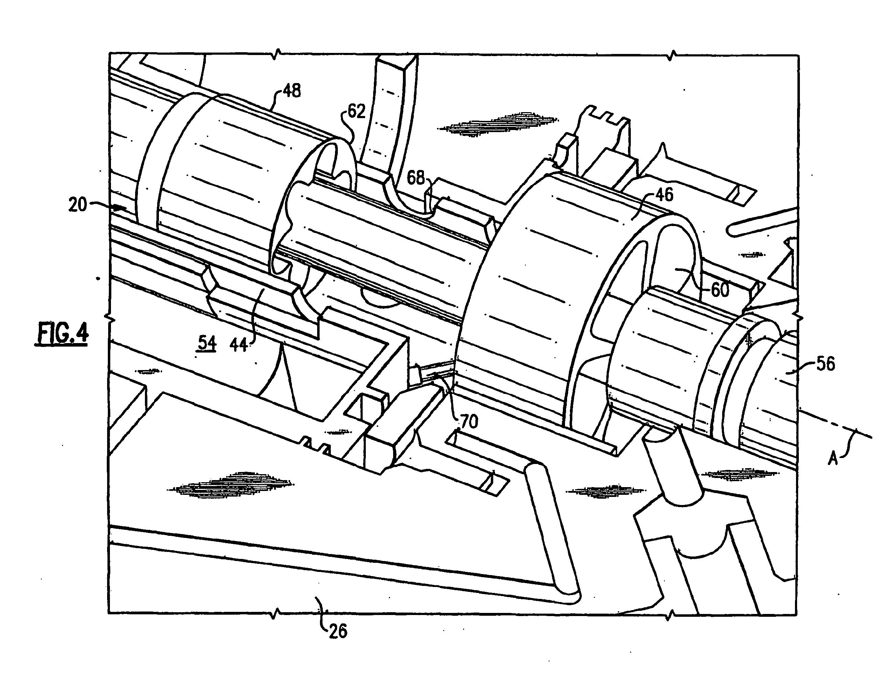

The primary separating impeller 46 includes internal vanes 60 (Figure 4) that facilitate spinning of the two-phase liquid at shaft speed in order to develop the proper 'g' levels to drive the liquid radially outward while allowing the gas to remain adjacent the gas outlet tube 56.

The secondary separating impeller 48 inside the hollow shaft 44 facilitates separation capability and robustness. This secondary separating impeller 48 includes internal passages 62 (Figure 4) that are drilled at an angle to the axis of rotation A to drive liquid (if present) away from an inlet 64 to the gas outlet tube 56 and radially outward. The secondary separating impeller 48 also serves as a way to clear away any liquid from near the inlet 64 that may result from a shut-down and restart situation.

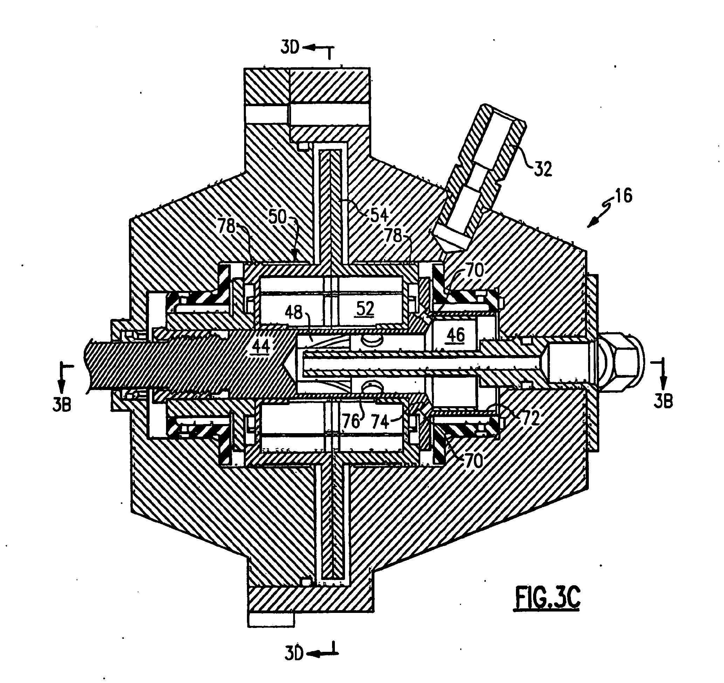

The hollow shaft 44 supports a stepped drum 50 (also illustrated in Figures 2 and 3C) for accumulation and pumping. The stepped drum 50 is mounted on the shaft 44 that is supported by the hydrodynamic bearings 40, 42. The stepped drum 50 is stepped such that there is a smaller diameter accumulator section 52 and a relatively large diameter impeller pump section 54. The accumulator section 52 is utilized to provide the primary accumulator function. The impeller pump section 54 is utilized for the pumping function.

The aspect ratio of the stepped drum 50 is preferably sized to minimize power for both the accumulating and pumping functions. The accumulator section 52 has a relatively small diameter to minimize power losses and uses axial length to accomplish volume for accumulation. The impeller pump section 54 of the drum has a larger diameter in order to achieve pumping head but has a small axial length in order to minimize power losses.

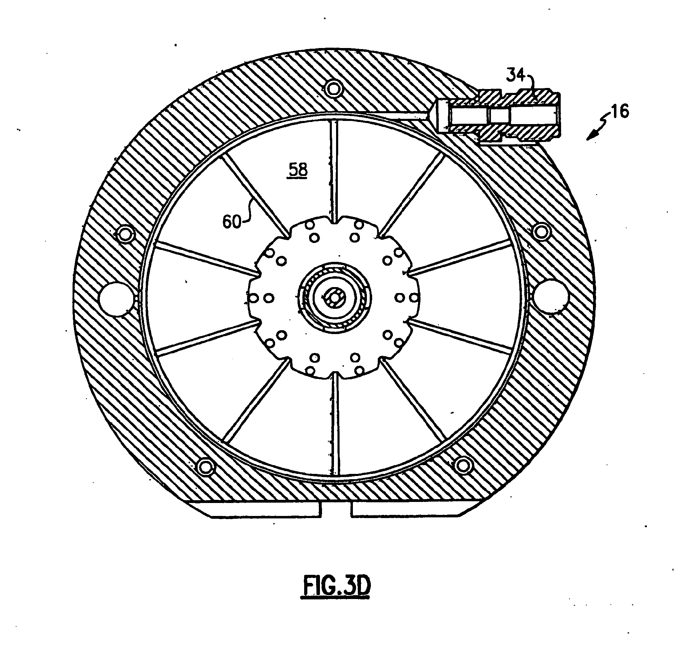

The impeller pump section 54 includes impeller disks 58 each having internal vanes 60 that facilitate the pumping function (also illustrated in Figure 3D). The stepped drum 50 is preferably manufactured from two identical "half" drums assembled opposite to each other which readily facilitates manufacture (Figure 3C). Preferably, the stepped drum 50 includes smooth exterior walls on the stepped drum 50 to minimize power losses. Smooth rotating walls of the stepped drums adjacent to smooth stationary walls formed in the housing assembly 24 typically exhibit less drag than non-smooth geometry thereby minimizing the power required to rotate the rotational assembly 20.

Preferably, a labyrinth type geometry seal 78 is located on the outer diameter of the accumulator section 52 of stepped drum 50 to minimize the flow of a recirculation loop from the high-pressure side of the pump (at the largest diameter) to the inlet side of the pump. It should be understood that various seal arrangements may be used with the present invention.

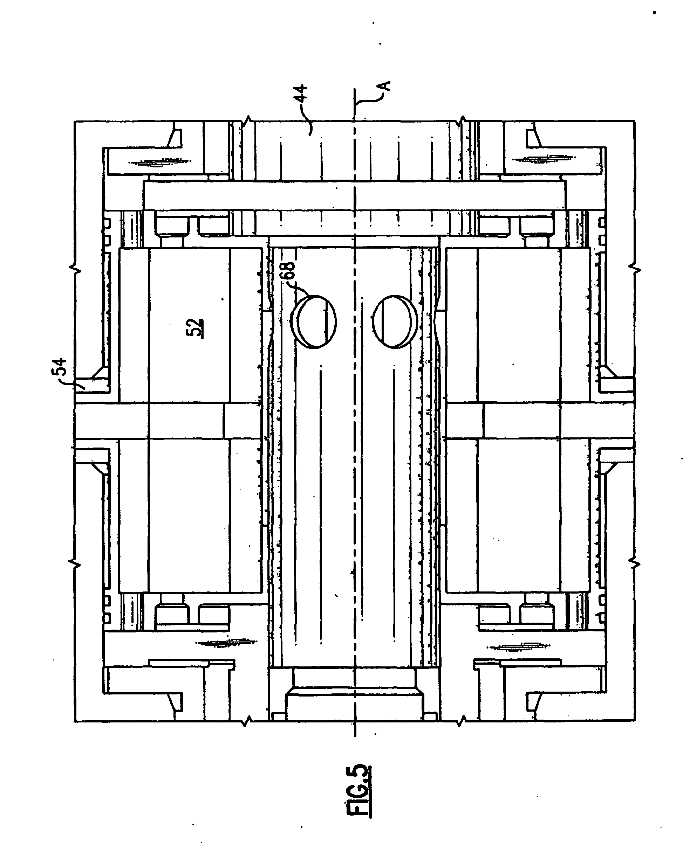

The hollow shaft 44 includes a multitude of shaft gas communication apertures 68 (also illustrated in Figures 4 and 5) in communication with the accumulator section 52 and the impeller pump section 54. A multitude of liquid communication ports 70 (also illustrated in Figure 4) are located adjacent an outer diameter of an impeller shaft section 72 which contains the primary separating impeller 46. The liquid communication ports 70 provide communication between the primary separating impeller 46 and the accumulator section 52. Preferably, the liquid communication ports 70 are circumferentially located and angled outward relative to axis A about the hollow shaft 44 adjacent a junction 74 between the impeller shaft section 72 and a central shaft section 76.

In operation, the two-phase flow (water in mostly gas stream) is input into the impeller shaft section 72 of the hollow shaft through the two-phase inlet port 38. The two-phase flow is centrifugally flung to the outer diameter of the impeller shaft section 72 that moves the water radially outward through the liquid communication ports 70 while allowing the gas to communicate into the central shaft section 76. The primary separating impeller 46 provides ample flow area for the gas while maintaining relatively small clearance to the central shaft section 76 and thence to the inlet 64 of the gas outlet tube 56 to avoid liquid carryover. The secondary separating impeller 48 facilitates separation capability and robustness to further minimize liquid (if present) entry into the inlet 64 of the gas outlet tube 56.

The accumulating function is effectuated inside the accumulator section 52 and the impeller pump section 54 that create a stepped annulus around the center hollow shaft 44. The water rotates at essentially shaft speed since it is fully enclosed by the accumulator section 52 and the impeller pump section 54 and has virtually no exposure to stationary housing walls. The "full" level is at the OD of the hollow shaft 44. The "empty" level of the accumulator will be at the OD of the accumulator section 52. The smooth outside walls of the stepped drum 50 minimize power losses. A minimized diameter to length ratio also minimizes power losses. Notably, as the accumulator section 52 and the impeller pump section 54 fill with liquid, gases therein (if present) are forced toward the axis of rotation A and back into the hollow shaft 44 through the shaft gas communication apertures 68 and thence into the inlet 64 of the gas outlet tube 56.

The pumping function is accomplished by the impeller pump section 54 which is facilitated by the internal vanes 60 between the impeller disks 58. Once the accumulator section 52 is "full," the liquid is pumped through the tangential outlet port 34 located at the maximum diameter of the impeller pump section 54 to maximize both static and dynamic head.

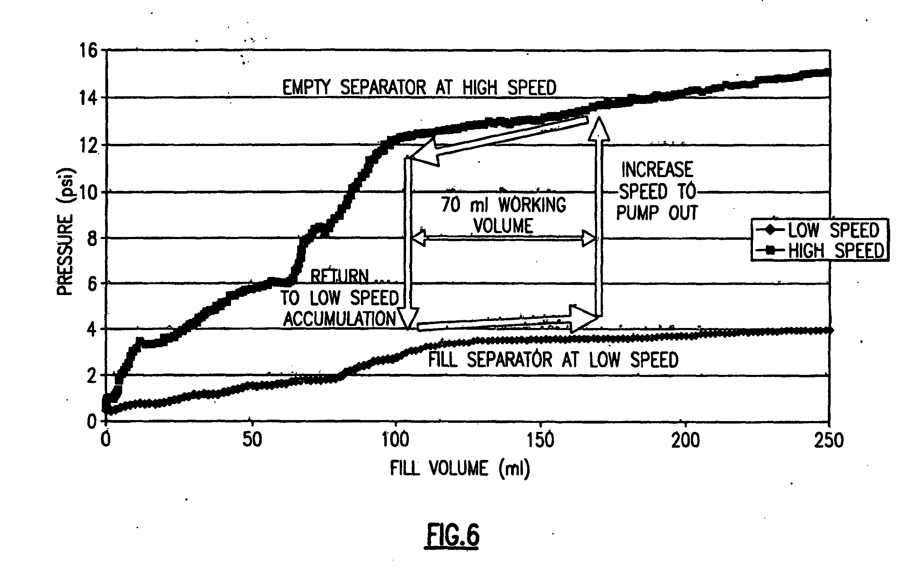

Preferably, the RDS 16 operates on a two-speed schedule. At low speed, about 1000 rpm, the RDS 16 creates enough of an artificial gravity field to effectively separate the gas and liquid phases. The gas outlet port 36 is open when the Sabatier is in process mode generating water; therefore the vent gases flow through the RDS 16 with very little pressure drop. Pressure port 32, the gas outlet port tap 36 and the radial port 34 (Figure 3) at the drum outer diameter allow monitoring of the liquid level via differential pressure. Applicant has calibrated the pressure vs. volume in both 1-g and 0-g environments. Once the liquid level reaches the high end of the operating range ("full"), the controller (Figure 1) increases the speed of the RDS 16 to about 2000 rpm. At this speed, the pressure generated by the centrifugal and velocity forces in the impeller shaft section 72 of the rotating assembly 20 is sufficient to overcome the system backpressure and the liquid empties from the RDS 16. The high speed condition is maintained for a sufficient length of time such that the liquid level drops to the low end of the operating range as generally illustrated in the graphical representation of Figure 6.

## Claims

1. A rotating assembly (20) for a rotary phase separator system for separating a liquid from a two phase flow, said rotating assembly comprising:
a hollow shaft (44) defined along an axis of rotation (A) and arranged to receive a two phase flow;
an accumulator section (52) for accumulating liquid mounted about said hollow shaft (44) for rotation with said hollow shaft, said accumulator section communicating with said hollow shaft (44) and defining a first diameter; and
an impeller pump section (54) for pumping liquid from the rotating assembly mounted about said accumulator section (52) for rotation with said hollow shaft and communicating with said accumulator section (52), said impeller pump section (54) defining a second diameter greater than said first diameter.

2. The assembly as recited in claim 1, wherein said accumulator section (52) defines a first axial length and said impeller pump section defines a second axial length less than said first axial length.

3. The assembly as recited in claim 1 or 2, further comprising a primary separating impeller (46) mounted within said hollow shaft (44) for rotation therewith, said primary separating impeller being in communication with said accumulator section.

4. The assembly as recited in claim 3, wherein said primary separating impeller (46) is mounted within an impeller shaft section of said hollow shaft (44), said impeller shaft section being in communication with a central shaft section of said hollow shaft, said central shaft section including a multiple of shaft gas communication apertures (68) in communication with said accumulator section (52).

5. The assembly as recited in claim 4, further comprising a two-phase inlet (38) in communication with said impeller shaft section.

6. The assembly as recited in any preceding claim, further comprising a gas outlet tube (56) mounted within said hollow shaft, said gas outlet tube being in communication with a gas outlet port (36) defined along said axis of rotation.

7. The assembly as recited in claim 6, wherein said gas outlet tube includes an inlet (64) mounted opposite said gas outlet port along said axis of rotation.

8. The assembly as recited in claim 7, further comprising a secondary separating impeller (48) mounted within said hollow shaft (44) for rotation therewith, said secondary separating impeller being mounted adjacent said inlet (64) to said gas outlet tube (56).

9. The assembly as recited in any preceding claim, wherein said impeller pump section includes an impeller disc (68) and a multitude of impeller blades (60) mounted to said impeller disc in a radial arrangement about said axis of rotation.

10. The assembly as recited in claim 9, further comprising a liquid outlet port (30) tangential to said impeller pump section.

11. A rotary phase separator system for separating liquid from a two phase flow comprising:
a housing (24);
a hydrodynamic bearing (40, 42) mounted within said housing;
a rotating assembly (20) as claimed in claim 1 mounted to said hydrodynamic bearing for rotation within said housing, said rotating assembly further comprising a gas outlet tube (56) mounted within said hollow shaft, and a primary separating impeller (46) mounted within an impeller shaft section of said hollow shaft for rotation therewith;
a two-phase input port (38) within said housing and in communication with said impeller shaft section; and
a gas outlet port (36) within said housing along said axis of rotation, said gas outlet port being in communication with said gas outlet tube (56).

12. The system as recited in claim 11, wherein said impeller pump section (54) radially extends from said accumulator section (52), said impeller pump section includes an impeller disc (68) and a multitude of impeller blades (60) mounted to said impeller disc in a radial arrangement about said axis of rotation to define a stepped drum (50).

13. The system as recited in claim 12, further comprising an outlet port (30) within said housing tangential to said impeller pump section (54).

14. The system as recited in claim 11, 12 or 13 further comprising:
a motor (18) mounted to said hollow shaft (44); and
a controller (22) in communication with said motor to drive said hollow shaft at a multitude of speeds, said multiple of speeds include an accumulating speed and a pumping speed.

15. A method of recovering a liquid from a two phase flow comprising the steps of:
(1) rotating the rotating assembly (20) of claim 1 about the axis of rotation (A) at a first speed;
(2) introducing the two-phase flow into the rotating hollow shaft (44);
(3) separating the two-phase flow such that a liquid component is centrifugally separated radially outward relative to the axis of rotation (A) into the accumulator section (52) mounted about the hollow shaft (44);
(4) collecting a gas component generally along said axis of rotation (A);
(5) accumulating the liquid component within the accumulator section (52);
(6) selectively rotating the hollow shaft (44) about the axis of rotation (A) at a second speed greater than the first speed; and
(7) pumping out the liquid component with the impeller pump section (54) mounted about the accumulator section (52) in response to said step (6).

16. A method as recited in claim 15, wherein said step (3) further comprises:
(a) filling the accumulator section (52) with the liquid component from an outer diameter of the accumulator section (52) toward the axis of rotation (A); and
(b) driving the gas component radially inward toward the axis ofrotation (A).

17. A method as recited in claim 15 or 16, wherein said step (4) further comprises:
(c) communicating the gas component axially along the axis of rotation (A) through a gas outlet tube (56) mounted within said hollow shaft (44).

18. A method as recited in claim 15, 16 or 17 wherein said step (2) further comprises:
(a) introducing the two-phase flow into the impeller shaft section (72) of the rotating hollow shaft (44) which defines a diameter greater than a central shaft section of the rotating hollow shaft (44), the impeller shaft section (72) including the primary separating impeller (46) which rotates with the hollow rotating shaft (44).

19. A method as recited in claim 15, 16, 17 or 18 wherein said step (7) further comprises:
(a) pumping the liquid component through an outlet port (30) tangentially mounted adjacent an outer diameter of the impeller pump section (54) mounted about the accumulator section (52).

## Patentansprüche

1. Rotierende Anordnung (20) für ein rotierendes Phasenseparatorsystem zum Abscheiden einer Flüssigkeit aus einer Zweiphasen-Strömung, wobei die rotierende Anordnung Folgendes aufweist:
eine Hohlwelle (44), die entlang einer Rotationsachse (A) gebildet ist und zum Aufnehmen einer Zweiphasen-Strömung ausgebildet ist;
einen Speicherbereich (52) zum Akkumulieren von Flüssigkeit, der zum Ausführen einer Rotationsbewegung zusammen mit der Hohlwelle (44) um die Hohlwelle herum angebracht ist, wobei der Speicherbereich mit der Hohlwelle (44) in Verbindung steht und einen ersten Durchmesser bildet; und
einen Laufradpumpenbereich (54) zum Pumpen von Flüssigkeit von der rotierenden Anordnung, der zum Ausführen einer Rotationsbewegung zusammen mit der Hohlwelle um den Speicherbereich (52) herum angebracht ist, wobei der Laufradpumpenbereich (54) einen zweiten Durchmesser bildet, der größer ist als der erste Durchmesser.

2. Anordnung nach Anspruch 1,
wobei der Speicherbereich (52) eine erste axiale Länge bildet und der Laufradpumpenbereich eine zweite axiale Länge bildet, die geringer ist als die erste axiale Länge.

3. Anordnung nach Anspruch 1 oder 2,
weiterhin aufweisend ein primäres Abscheide-Laufrad (46), das im Inneren der Hohlwelle (44) zusammen mit dieser drehbar angebracht ist, wobei das primäre Abscheide-Laufrad mit dem Speicherbereich in Verbindung steht.

4. Anordnung nach Anspruch 3,
wobei das primäre Abscheide-Laufrad (46) in einem Laufradwellenbereich der Hohlwelle (44) angebracht ist, wobei der Laufradwellenbereich mit einem zentralen Wellenbereich der Hohlwelle in Verbindung steht und wobei der zentrale Wellenbereich mehrere Wellen-Gasverbindungsöffnungen (68) in Verbindung mit dem Speicherbereich (52) aufweist.

5. Anordnung nach Anspruch 4,
weiterhin aufweisend einen Zweiphasen-Einlass (38) in Verbindung mit dem Laufradwellenbereich.

6. Anordnung nach einem der vorausgehenden Ansprüche,
weiterhin aufweisend ein Gasaustrittsrohr (56), das im Inneren der Hohlwelle angebracht ist, wobei das Gasaustrittsrohr mit einer Gasaustrittsöffnung (36) in Verbindung steht, die entlang der Rotationsachse gebildet ist.

7. Anordnung nach Anspruch 6,
wobei das Gasaustrittsrohr einen Einlass (64) aufweist, der gegenüber der Gasaustrittsöffnung entlang der Rotationsachse angebracht ist.

8. Anordnung nach Anspruch 7.
weiterhin aufweisend ein sekundäres Abscheide-Laufrad (48), das in der Hohlwelle (44) zusammen mit dieser drehbar angebracht ist, wobei das sekundäre Abscheide-Laufrad benachbart dem Einlass (64) in das Gasaustrittsrohr (56) angebracht ist.

9. Anordnung nach einem der vorausgehenden Ansprüche,
wobei der Laufradpumpenbereich eine Laufradscheibe (68) und eine Vielzahl von Laufradschaufeln (60) aufweist, die an der Laufradscheibe in einer radialen Anordnung um die Rotationsachse angebracht sind.

10. Anordnung nach Anspruch 9,
weiterhin aufweisend eine Flüssigkeitsaustrittsöffnung (30) tangential zu dem Laufradpumpenbereich.

11. Rotierendes Phasenseparatorsystem zum Abscheiden von Flüssigkeit aus einer Zweiphasen-Strömung, aufweisend:
ein Gehäuse (24);
ein hydrodynamisches Lager (40, 42), das in dem Gehäuse angebracht ist;
eine rotierende Anordnung (20) nach Anspruch 1, die in dem hydrodynamischen Lager zur Ausführung einer Rotationsbewegung in dem Gehäuse angebracht ist, wobei die rotierende Anordnung weiterhin ein in der Hohlwelle angebrachtes Gasaustrittsrohr (56) und einen primäres Abscheide-Laufrad (46) aufweist, das in einem Laufradwellenbereich der Hohlwelle zusammen mit dieser drehbar angebracht ist;
eine Zweiphasen-Eintrittsöffnung (38) in dem Gehäuse und in Verbindung mit dem Laufradpumpenbereich; und
eine Gasaustrittsöffnung (36) in dem Gehäuse entlang der Rotationsachse, wobei die Gasaustrittsöffnung mit dem Gasaustrittsrohr (56) in Verbindung steht.

12. System nach Anspruch 11,
wobei sich der Laufradpumpenbereich (54) radial von dem Speicherbereich (52) weg erstreckt, wobei der Laufradpumpenbereich eine Laufradscheibe (68) und eine Vielzahl von Laufradschaufeln (60) aufweist, die an der Laufradscheibe in einer radialen Anordnung um die Rotationsachse angebracht sind, so dass eine Stufen-Trommel (50) gebildet ist.

13. System nach Anspruch 12,
weiterhin aufweisend eine Austrittsöffnung (30) in dem Gehäuse tangential zu dem Laufradpumpenbereich (54).

14. System nach Anspruch 11, 12 oder 13, weiterhin aufweisend:
einen Motor (18), der auf der Hohlwelle (44) angebracht ist; und
eine Steuerung (22) in Verbindung mit dem Motor zum Antreiben der Hohlwelle mit einer Vielzahl von Drehzahlen, wobei die Vielzahl von Drehzahlen eine Akkumulier-Drehzahl und eine Pump-Drehzahl beinhalten.

15. Verfahren zum Rückgewinnen einer Flüssigkeit aus einer Zweiphasen-Strömung, wobei das Verfahren folgende Schritte aufweist:
(1) Drehen der rotierenden Anordnung (20) nach Anspruch 1 um die Rotationsachse (A) mit einer ersten Drehzahl;
(2) Einleiten der Zweiphasen-Strömung in die rotierende Hohlwelle (44);
(3) Trennen der Zweiphasen-Strömung derart, dass eine Flüssigkeitskomponente relativ zu der Rotationsachse (A) radial außen in dem um die Hohlwelle (44) herum angebrachten Speicherbereich (52) zentrifugal abgeschieden wird;
(4) Sammeln einer Gaskomponente im Allgemeinen entlang der Rotationsachse (A);
(5) Akkumulieren der Flüssigkeitskomponente in dem Speicherbereich (52);
(6) selektives Drehen der Hohlwelle (44) um die Rotationsachse (A) mit einer zweiten Drehzahl, die höher ist als die erste Drehzahl; und
(7) Abpumpen der Flüssigkeitskomponente mit dem um den Speicherbereich (52) angebrachten Laufradpumpenbereich (54) in Abhängigkeit von dem Schritt (6).

16. Verfahren nach Anspruch 15,
wobei der Schritt (3) ferner Folgendes beinhaltet:
(a) Füllen des Speicherbereichs (52) mit der Flüssigkeitskomponente von einem Außendurchmesser des Speicherbereichs (52) her in Richtung auf die Rotationsachse (A); und
(b) Treiben der Gaskomponente radial nach innen zur Rotationsachse (A) hin.

17. Verfahren nach Anspruch 15 oder 16,
wobei der Schritt (4) ferner Folgendes beinhaltet:
(c) Übertragen der Gaskomponente axial entlang der Rotationsachse (A) durch ein in der Hohlwelle (44) angebrachtes Gasaustrittsrohr (56).

18. Verfahren nach Anspruch 15, 16 oder 17,
wobei der Schritt (2) ferner Folgendes beinhaltet:
(a) Einleiten der Zweiphasen-Strömung in den Laufradwellenbereich (72) der rotierenden Hohlwelle (44), der einen größeren Durchmesser als ein zentraler Wellenbereich der rotierenden Hohlwelle (44) bildet, wobei der Laufradwellenbereich (72) das primäre Abscheide-Laufrad (46) beinhaltet, das sich zusammen mit der rotierenden Hohlwelle (44) dreht.

19. Verfahren nach Anspruch 15, 16, 17 oder 18,
wobei der Schritt (7) ferner Folgendes beinhaltet:
(a) Pumpen der Flüssigkeitskomponente durch eine Austrittsöffnung (30), die einem Außendurchmesser des um den Speicherbereich (52) herum angebrachten Laufradpumpenbereichs (54) benachbart tangential angebracht ist.

## Revendications

1. Ensemble rotatif (20) pour un système rotatif de séparateur de phase pour séparer un liquide d'un flux diphasique, ledit ensemble rotatif comprenant :
un arbre creux (44) défini le long d'un axe de rotation (A) et agencé pour recevoir un flux diphasique ;
une section d'accumulateur (52) pour accumuler le liquide montée autour dudit arbre creux (44) pour une rotation avec ledit arbre creux, ladite section d'accumulateur communiquant avec ledit arbre creux (44) et définissant un premier diamètre ; et
une section de turbopompe (54) pour pomper du liquide de l'ensemble rotatif monté autour de ladite section d'accumulateur (52) pour une rotation avec ledit arbre creux et communiquant avec ladite section d'accumulateur (52), ladite section de turbopompe (54) définissant un second diamètre plus grand que ledit premier diamètre.

2. Ensemble selon la revendication 1, dans lequel ladite section d'accumulateur (52) définit une première longueur axiale et ladite section de turbopompe définit une seconde longueur axiale inférieure à ladite première longueur axiale.

3. Ensemble selon la revendication 1 ou 2, comprenant en outre une hélice de séparation principale (46) montée au sein dudit arbre creux (44) pour une rotation avec celui-ci, ladite roue de séparation principale étant en communication avec ladite section d'accumulateur.

4. Ensemble selon la revendication 3, dans lequel ladite roue de séparation principale (46) est montée au sein d'une section d'arbre de roues dudit arbre creux (44), ladite section d'arbre de roues étant en communication avec une section d'arbre centrale dudit arbre creux, ladite section d'arbre centrale incluant un certain nombre d'ouvertures de communication gazeuse d'arbre (68) en communication avec ladite section d'accumulateur (52).

5. Ensemble selon la revendication 4, comprenant en outre une entrée diphasique (38) en communication avec ladite section d'arbre de roues.

6. Ensemble selon l'une quelconque des revendications précédentes, comprenant en outre un tube de sortie de gaz (56) monté au sein dudit arbre creux, ledit tube de sortie de gaz étant en communication avec un orifice de sortie de gaz (36) défini le long dudit axe de rotation.

7. Ensemble selon la revendication 6, dans lequel ledit tube de sortie de gaz inclut une entrée (64) montée à l'opposé dudit orifice de sortie de gaz le long dudit axe de rotation.

8. Ensemble selon la revendication 7, comprenant en outre une hélice de séparation secondaire (48) montée au sein dudit arbre creux (44) pour une rotation avec celui-ci, ladite roue de séparation secondaire étant montée à côté de ladite entrée (64) sur ledit tube de sortie de gaz (56).

9. Ensemble selon l'une quelconque des revendications précédentes, dans lequel ladite section de turbopompe inclut un disque d'hélice (68) et une multitude de pales d'hélice (60) montée sur ledit disque d'hélice dans un agencement radial autour dudit axe de rotation.

10. Ensemble selon la revendication 9, comprenant en outre un orifice de sortie de liquide (30) tangentiel à ladite section de turbopompe.

11. Système rotatif de séparateur de phase pour séparer un liquide d'un flux diphasique comprenant :
un logement (24) ;
un palier hydrodynamique (40, 42) monté au sein dudit logement ;
un ensemble rotatif (20) selon la revendication 1, monté sur ledit palier hydrodynamique pour une rotation au sein dudit logement, ledit ensemble rotatif comprenant en outre un tube de sortie de gaz (56) monté au sein dudit arbre creux, et une roue de séparation principale (46) montée au sein d'une section d'arbre de roues dudit arbre creux pour une rotation avec celui-ci ;
un orifice d'entrée diphasique (38) au sein dudit logement et en communication avec ladite section d'arbre de roues ; et
un orifice de sortie de gaz (36) au sein dudit logement le long dudit axe de rotation, ledit orifice de sortie de gaz étant en communication avec ledit tube de sortie de gaz (56).

12. Système selon la revendication 11, dans lequel ladite section de turbopompe (54) s'étend radialement à partir de ladite section d'accumulateur (52), ladite section de turbopompe incluant un disque d'hélice (68) et une multitude de pales d'hélice (60) montée sur ledit disque d'hélice dans un agencement radial autour dudit axe de rotation pour définir un tambour cranté (50).

13. Système selon la revendication 12, comprenant en outre un orifice de sortie (30) au sein dudit logement tangentiel à ladite section de turbopompe (54).

14. Système selon la revendication 11, 12 ou 13, comprenant en outre :
un moteur (18) monté sur ledit arbre creux (44) ; et
un dispositif de commande (22) en communication avec ledit moteur pour entraîner ledit arbre creux à une multitude de vitesses, ladite multitude de vitesses comprenant une vitesse d'accumulation et une vitesse de pompage.

15. Procédé de récupération d'un liquide d'un flux diphasique comprenant les étapes suivantes :
(1) faire tourner l'ensemble rotatif (20) de la revendication 1 autour de l'axe de rotation (A) à une première vitesse ;
(2) introduire le flux diphasique dans l'arbre creux (44) en rotation ;
(3) séparer le flux diphasique de sorte qu'un composant liquide est séparé par centrifugation radialement vers l'extérieur par rapport à l'axe de rotation (A) dans la section d'accumulateur (52) montée sur l'arbre creux (44) ;
(4) collecter un composant gazeux généralement le long dudit axe de rotation (A) ;
(5) accumuler le composant liquide au sein de la section d'accumulateur (52) ;
(6) faire tourner sélectivement l'arbre creux (44) autour de l'axe de rotation (A) à une deuxième vitesse supérieure à la première vitesse ; et
(7) pomper le composant liquide avec la section de turbopompe (54) montée autour de la section d'accumulateur (52) en réponse à ladite étape (6).

16. Procédé selon la revendication 15, dans lequel l'étape (3) comprend en outre :
(a) le remplissage de la section d'accumulateur (52) avec le composant liquide d'un diamètre externe de la section d'accumulateur (52) vers l'axe de rotation (A) ; et
(b) l'entraînement du composant gazeux radialement vers l'intérieur vers l'axe de rotation (A).

17. Procédé selon la revendication 15 ou 16, dans lequel ladite étape (4) comprend en outre :
(c) la communication du composant gazeux axialement le long de l'axe de rotation (A) à travers un tube de sortie de gaz (56) monté au sein dudit arbre creux (44).

18. Procédé selon la revendication 15, 16 ou 17, dans lequel ladite étape (2) comprend en outre :
(a) l'introduction du flux diphasique dans la section d'arbre de roues (72) de l'arbre creux rotatif (44) qui définit un diamètre plus grand qu'une section d'arbre centrale de l'arbre creux rotatif (44), la section d'arbre de roues (72) incluant la roue de séparation principale (46) qui tourne avec l'arbre rotatif creux (44).

19. Procédé selon la revendication 15, 16, 17 ou 18, dans lequel ladite étape (7) comprend en outre :
(a) le pompage du composant liquide à travers un orifice de sortie (30) monté tangentiellement à côté d'un diamètre externe de la section de turbopompe (54) montée sur la section d'accumulateur (52).
